(19) Europäisches Patentamt
European Patent Office
Office européen des brevets

(11)  **EP 3 720 743 B1**

(12)  **EUROPEAN PATENT SPECIFICATION**

(45) Date of publication and mention
of the grant of the patent:
**19.01.2022  Bulletin 2022/03**

(21) Application number: **18830937.1**

(22) Date of filing: **03.12.2018**

(51) International Patent Classification (IPC):
**B60T 8/171** (2006.01)    **B60T 8/172** (2006.01)
**B60T 8/17** (2006.01)    **G01M 17/10** (2006.01)

(52) Cooperative Patent Classification (CPC):
**B60T 8/172; B60T 8/1705; B60T 8/171;
G01M 17/10;** B60T 2250/04

(86) International application number:
**PCT/IB2018/059561**

(87) International publication number:
**WO 2019/111128 (13.06.2019 Gazette 2019/24)**

(54)  **A SYSTEM FOR DETERMINING AN ANGULAR SPEED OF AN AXLE OF A RAILWAY VEHICLE AND CORRESPONDING METHOD**

SYSTEM ZUR BESTIMMUNG DER WINKELGESCHWINDIGKEIT EINER ACHSE EINES SCHIENENFAHRZEUGES UND ENTSPRECHENDES VERFAHREN

SYSTÈME DE DÉTERMINATION D'UNE VITESSE ANGULAIRE D'UN ESSIEU D'UN VÉHICULE FERROVIAIRE ET PROCÉDÉ CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.12.2017  IT 201700139691**

(43) Date of publication of application:
**14.10.2020  Bulletin 2020/42**

(73) Proprietor: **Faiveley Transport Italia S.p.A.
10045 Piossasco (TO) (IT)**

(72) Inventors:
• **FREA, Matteo
I-10060 CANTALUPA (Torino) (IT)**
• **IMBERT, Luc
I-10128 Torino (IT)**

(74) Representative: **Deambrogi, Edgardo et al
Jacobacci & Partners S.p.A.
Corso Emilia 8
10152 Torino (IT)**

(56) References cited:
**WO-A1-01/68388    WO-A1-2006/128878
US-A- 3 718 040**

## Description

### Technical field

The present invention relates, in general, to the field of systems and sensors for monitoring the angular speed of an axle of a railway vehicle; in particular, the invention relates to a system for determining an angular speed of an axle of a railway vehicle and to a corresponding method.

### Background art

In known systems and methods that are usually used on board trains, to measure angular speed $\omega$ of an axle, the presence of at least one toothed phonic wheel is usually provided integral with the axle, and the presence of a sensor adapted to detect the passage frequency of the phonic wheel teeth in front of the sensor (speed sensor).

The time interval between the passage of two consecutive teeth in front of the sensor may be referred to as "tooth period" ($T_{tooth}$). The number of teeth that make up the phonic wheel may be referred to as $n_{teeth}$.

By multiplying $T_{tooth}$ and $N_{teeth}$, the period of rotation of the phonic wheel is obtained, that is the period of rotation of the axle and wheels.

$$T_{wheel} = T_{tooth} * n_{teeth}$$

The angular speed $\omega$ of the wheel is calculated starting from its rotation period by the following relation.

$$\omega_{ruota} = \frac{2\pi}{T_{ruota}}$$

Disadvantageously, such systems require dedicated (ad hoc) components used exclusively for the purpose of detecting the angular speed of the axle. These components provide a phonic wheel, a sensor, electronics and acquisition software, a series of electrical wiring shielded from electromagnetic noise (noise that can distort the sensor's frequency measurement). This components are used for the sole purpose of detecting the angular speed of the axle with the consequent drawbacks in terms of costs and installation times.

Moreover, it is prior art to install one or more strain gauges (in various configurations, for example, full Wheatstone bridge, "half bridge" or "quarter bridge") on the axle and/or wheel of a railway vehicle to estimate the contact forces between the wheels and the rail, starting from the deformation of the axle.

Examples thereof are given in document WO 2006/128878 A1.

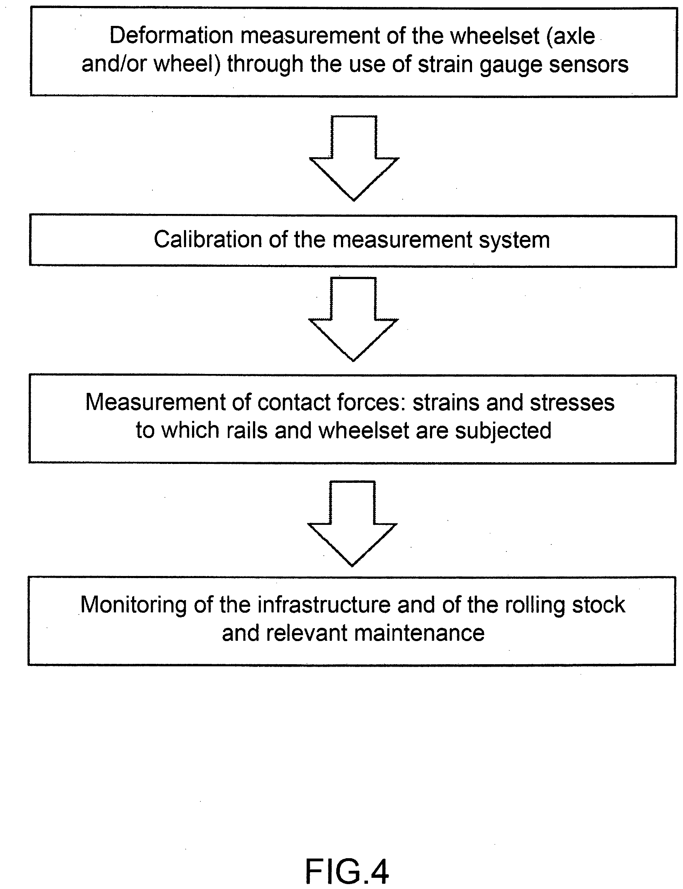

Currently, the estimate of the wheel-rail contact forces has as its sole main objective the monitoring of the infrastructure and rolling stock and the relative scheduling of maintenance and/or correction interventions (as illustrated in the block diagram in figure 4).

At present, therefore, known systems and processes that provide for the installation of one or more strain gauges on the axle and/or wheel of a railway vehicle do not provide for the possibility of using the measurements made by means of said one or more strain gauges to determine the angular speed of the axle and, consequently, the translational speed of the vehicle.

### Summary of the invention

An object of the present invention is therefore to allow a measurement of the angular speed of an axle and, consequently, the calculation of the translational speed of the vehicle without the use of dedicated additional angular speed sensors.

To obtain this result, a system for determining the angular speed of a railway vehicle axle is proposed.

This system comprises a deformation detection circuit coupled to an axle of the railway vehicle. The deformation detection circuit is provided for detecting the trend over time of a value of flexural deformation of the axle due to a value of normal load exerted by the axle on the rail.

The system for determining an angular speed value further comprises a control means arranged for estimating the angular speed of the axle as a function of a frequency derived from the time trend of the flexural deformation value of the axle which is detected by the deformation detection circuit.

The above and other objects and advantages are achieved, according to an aspect of the invention, by a system for determining an angular speed of a railway vehicle axle having the features defined in claim 1 and by a method for determining an angular speed of an axle of a railway vehicle having the features defined in claim 8. Preferred embodiments of the invention are defined in the dependent claims.

### Brief description of the drawings

The functional and structural features of some preferred embodiments of a system and a method for determining the angular speed of an axle of a railway vehicle according to the invention will now be described. Reference will be made to the accompanying drawings, in which:

- figure 1 illustrates an axis of a railway vehicle to which a deformation detection circuit is coupled;
- figure 2 illustrates by way of example the signal generated by the deformation detection circuit subjected to a flexural deformation, during the movement of the train;
- figure 3A illustrates by way of example the case in which the deformation detection circuit is located on the lower surface of the axle (lower part) and the load force produces an elongation deformation;
- figure 3B illustrates by way of example the case in which the deformation detection circuit is located on the upper surface of the axle (upper part) and the load force produces a compression deformation; and
- figure 4 illustrates a block diagram illustrating the steps usually performed by the systems implemented according to the prior art.

Detailed description

Before explaining a plurality of embodiments of the invention in detail, it should be noted that the invention is not limited in its application to the construction details and to the configuration of the components presented in the following description or shown in the drawings. The invention can take other embodiments and be implemented or practically carried out in different ways. It should also be understood that the phraseology and terminology are for descriptive purpose and are not to be construed as limiting. The use of "include" and "comprise" and variations thereof are intended as including the elements cited thereafter and their equivalents, as well as additional elements and equivalents thereof.

Furthermore, throughout the present description and in the claims, the terms and expressions indicating positions and orientations, such as "longitudinal", "transverse", "vertical" or "horizontal", refer to the travel direction of the train.

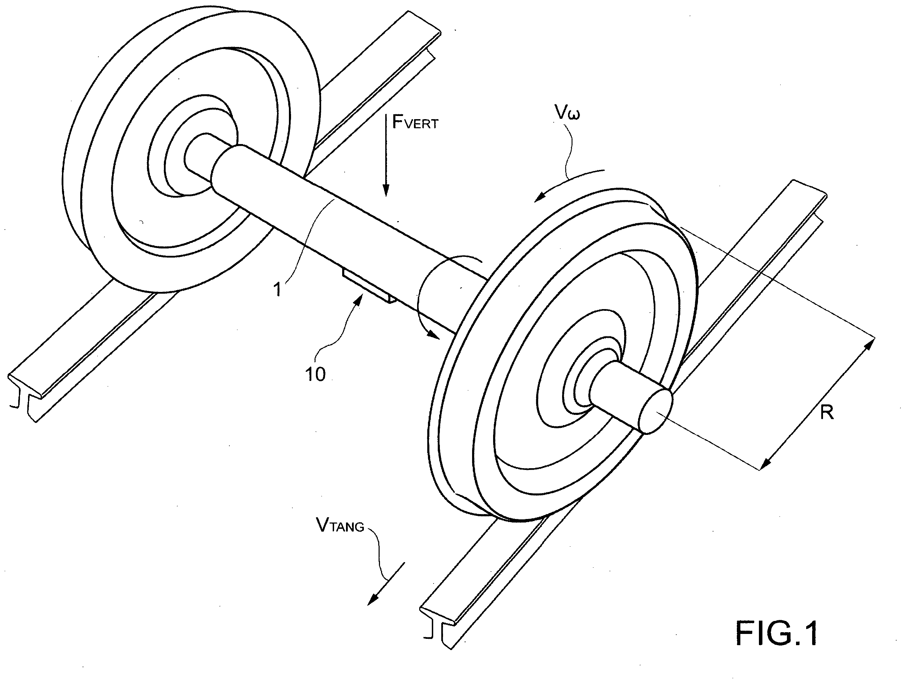

With reference initially to figure 1, an axle of a railway vehicle is illustrated by way of example to which a deformation detection circuit 10 is coupled, belonging to the system for determining an angular speed of a railway vehicle according to the invention.

In a first embodiment of the invention, the system for determining an angular speed $V_\omega$ of an axle of a railway vehicle comprises a deformation detection circuit 10 coupled to an axle 1 of the railway vehicle.

The deformation detection circuit 10 is coupled to an axle 1 of the railway vehicle and is provided for detecting the trend over time of a value of flexural deformation of the axle 1 which is due to a value of normal load exerted by the axle on the rail.

The system for determining an angular speed $V\omega$ of a railway vehicle further comprises a control means provided for estimating an angular speed value $V_\omega$ of the axle as a function of a frequency f derived from the trend over time of the value of flexural deformation of the axle 1 detected by the deformation detection circuit 10.

Starting from the fact that two wheels having a radius R are coupled to the axle 1 and said control means may be further arranged to convert said value of angular speed $V_\omega$ of the axle into a value of tangential speed $V_{tang}$ of the railway vehicle according to the radius of the wheels R.

The formula used to estimate the angular speed $V_\omega$ of the axle as a function of the frequency f derived from the trend over time of the value of flexural deformation of the axle 1 detected by the deformation detection circuit 10 may for example be the following:

$$V_\omega \doteq 2 * \pi * f$$

The formula used to convert said angular speed value of the axle $V_\omega$ into a tangential velocity value $V_{tang}$ may be for example the following:

$$V_{tang} = V_\omega * \text{Radius of the wheel}$$

The control means may be arranged, for example, locally in proximity to the or directly in the deformation detection circuit 10. Alternatively, the control means may be arranged remotely with respect to the deformation detection circuit 10 in other control units on board the vehicle or in remote control stations with respect to the railway vehicle. Therefore, the control means can receive the data from the deformation detection circuit 10 either through a specific wiring or via a wireless connection.

The control means may be, for example, but not necessarily, a control unit, a processor or a microcontroller.

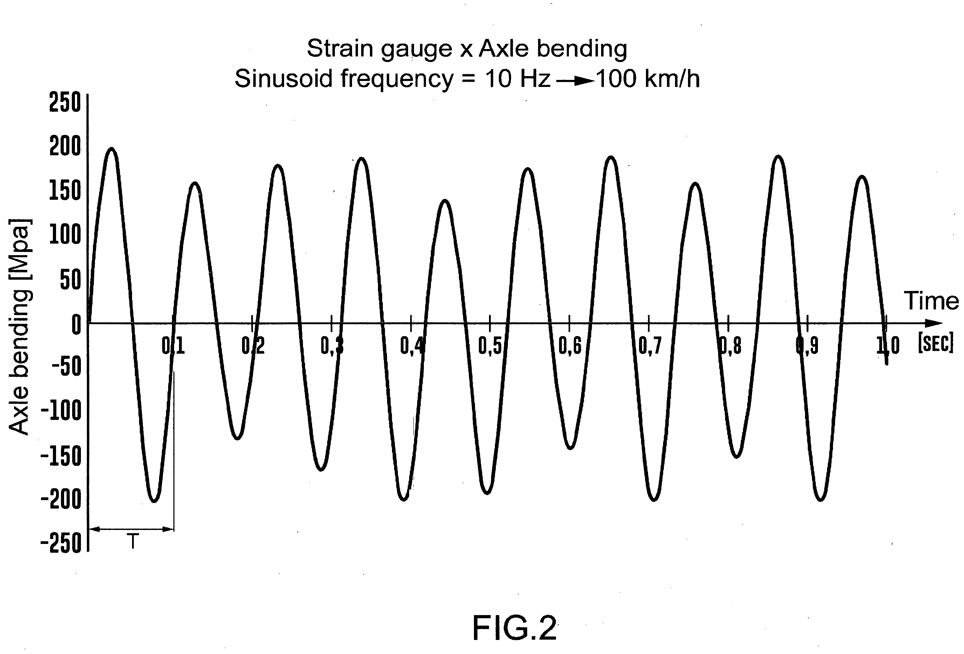

With reference to figure 2, starting from the signal generated by the deformation detection circuit 10 when subjected to a flexural deformation, during the movement of the railway vehicle, the system for determining an angular speed $V_\omega$ of an axle of a railway vehicle may be able to estimate the tangential speed $V_{tang}$ of the vehicle.

The deformation detection circuit 10 may comprise at least one strain gauge sensor means and/or at least one piezoelectric sensor means.

The strain gauge sensor or the piezoelectric sensor means may be arranged parallel to the axle 1.

The strain gauge sensors and/or the piezoelectric sensor means may also be more than one, so as to increase the accuracy of the measurement.

With the vehicle stationary, the flexural deformation of the axle is correlated with the static load of the vehicle on the axle itself.

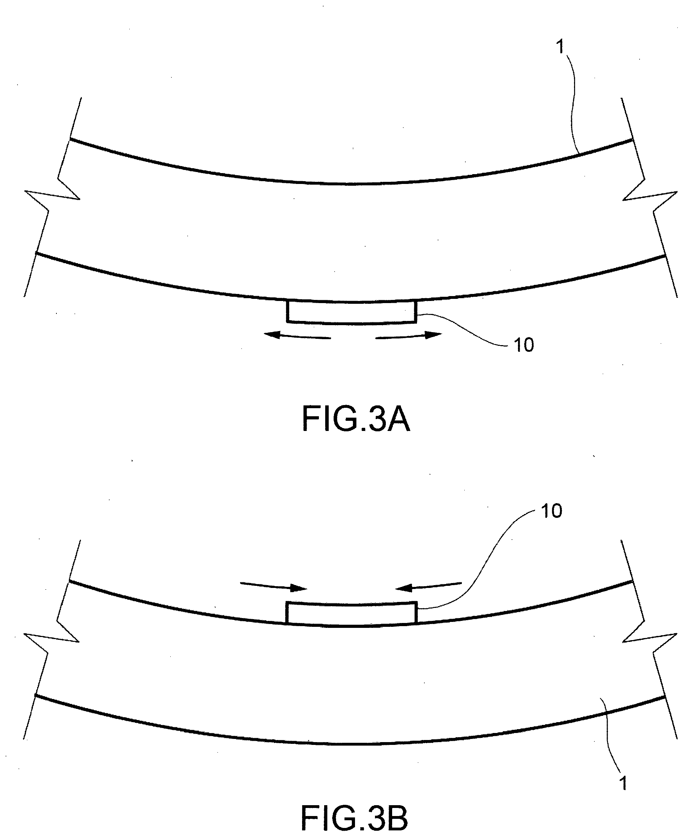

Referring to figures 3A and 3B, in the case where the deformation detection circuit 10 is located on the upper surface of the axle 1 (upper part), the load force produces a compression deformation. In the case in which the deformation detection circuit 10 is located on the lower surface of the axle (lower part), the load force produces an elongation deformation.

When the railway vehicle is moving, the rotation of the axle 1 will cause the deformation detection circuit 10, which is permanently associated with said axle 1, to cyclically switch from being on the upper surface of the axle (upper part) on the lower surface of the axle (lower part).

Then, during the travel of the railway vehicle, the output signal from the deformation detection circuit 10 (attributable to a vertical force, $F_{vert}$) will be of a sinusoidal type with mean value equal to zero, frequency f equal to the rotation frequency of the vehicle axle and amplitude proportional to the flexural stresses to which the axle is subjected ("jolts").

As illustrated in figure 2, T is an example of a period of the output signal from the deformation detection circuit 10. The frequency f will correspond to the reciprocal of the period T. This period T varies according to the speed of the railway vehicle.

The frequency f of the output signal from the deformation detection circuit 10, indicative of the time trend of the flexural deformation value of the axle 1, is the frequency f which can be used to estimate an angular speed value $V_{\omega}$ of the axle.

An elaboration of this signal can be used to estimate the angular speed $V_{\omega}$ of the axle and therefore, known the radius of the wheel, of the tangential speed $V_{tang}$ of the railway vehicle.

In other words, the control means may be arranged to determine the tangential speed $V_{tang}$ of the railway vehicle according to the frequency f derived from the time trend of the flexural deformation value of the axle 1 detected by the deformation detection circuit 10 and of the wheel radius R.

The present invention also relates to a method for determining an angular speed $V_{\omega}$ of an axle of a railway vehicle which comprises the steps of:

- detecting the trend over time of a value of flexural deformation of the axle 1 due to a value of normal load exerted by the axle on the rail;
- estimating a value of angular speed $V_{\omega}$ of the axle as a function of a frequency f derived from the trend over time of the detected value of flexural deformation of the axle 1.

Furthermore, starting from the assumption that on the axle 1 two wheels having a radius R are coupled, the process for determining an angular speed $V_{\omega}$ of an axle of a railway vehicle may further comprise the step of:

- converting said value of angular speed $V_{\omega}$ of the axle into a value of tangential speed $V_{tang}$ of the railway vehicle as a function of the radius of the wheels R.

Also with regard to the process for determining the angular speed of an axle of a railway vehicle, the formula used to estimate an angular speed value $V_{\omega}$ of the axle as a function of a frequency f derived from the trend over time of a value of flexion deformation of the axle 1 detected by the deformation detection circuit 10 and the formula used to convert said angular speed value $V_{\omega}$ of the axle into a tangential speed value $V_{tang}$ may be for example those described above for the system for the determination of an angular speed of an axle of a railway vehicle.

The advantage achieved is that of allowing, through the use of a deformation detection circuit, an estimate of the angular speed of an axle of a railway vehicle starting from flexural deformations of the axle.

Various aspects and embodiments of a system for determining an angular speed $V_{\omega}$ of an axle of a railway vehicle, and of a method for determining an angular speed $V_{\omega}$ of an axle of a railway vehicle have been described, for a railway vehicle according to the invention. The invention, moreover, is not limited to the described embodiments, but may be varied within the scope defined by the appended claims.

**Claims**

1. A system for determining an angular speed (Vω) of an axle (1) of a railway vehicle, comprising:

   - a deformation detection circuit (10) coupled to the axle (1) of the railway vehicle; said deformation detection circuit (10) being arranged to detect the trend over time of a value of flexural deformation of the axle (1) due to a value of a normal load exerted by the axle on the rail;
   - a control means arranged to estimate a value of angular speed (Yω) of the axle as a function of a frequency f derived from the trend over time of the value of flexural deformation of the axle (1) detected by the deformation detection circuit (10).

2. A system for determining an angular speed (Vω) of an axle of a railway vehicle according to claim 1, wherein two wheels having a radius (R) are coupled to the axle (1) and said control means is further arranged to convert said value of angular speed (Vω) of the axle into a value of tangential speed (Vtang) of the railway vehicle according to the radius of the wheels (R).

3. A system for determining an angular speed (Vω) of an axle of a railway vehicle according to claim 1 or 2, wherein the formula used to estimate a value of angular speed (Vω) of the axle as a function of the frequency f derived from the trend over time of the value of flexural deformation of the axle (1) detected by the deformation detection circuit (10) is:

$$V_{\omega} = 2 * \pi * f$$

4. A system for determining an angular speed (Vω) of an axle of a railway vehicle according to any of the preceding claims, wherein the formula used to convert the value of angular speed (Vω) of the axle into a value of tangential speed (Vtang) of the railway vehicle is:

$$V_{tang} = V\omega * radius\ of\ the\ wheel$$

5. A system for determining an angular speed ($V\omega$) of an axle of a railway vehicle according to any of the preceding claims, wherein the deformation detection circuit (10) comprises at least one strain-gage sensor means.

6. A system for determining an angular speed ($V_\omega$) of an axle of a railway vehicle according to any of the preceding claims, wherein the deformation detection circuit (10) comprises at least one piezoelectric sensor means.

7. A system for determining an angular speed ($V\omega$) of an axle of a railway vehicle according to claim 5 or 6, wherein the strain-gage sensor means or the piezoelectric sensor means is arranged parallel to the axle (1).

8. A method for determining a value of angular speed ($V\omega$) of an axle of a railway vehicle (1), comprising the steps of:

    - detecting the trend over time of a value of flexural deformation of the axle (1) due to a value of normal load exerted by the axle on the rail;
    - estimating a value of angular speed ($V\omega$) of the axle as a function of a frequency f derived from the trend over time of the detected value of flexural deformation of the axle (1).

9. A method for determining a value of angular speed ($V\omega$) of an axle of a railway vehicle according to claim 8, wherein two wheels having a radius (R) are coupled to the axle (1) and the method further comprises the step of:

    - converting said value of angular speed ($V\omega$) of the axle into a value of tangential speed (Vtang) as a function of the radius (R) of the wheels.

**Patentansprüche**

1. System zur Bestimmung einer Winkelgeschwindigkeit ($V\omega$) einer Achse (1) eines Schienenfahrzeugs, aufweisend:

    - eine mit der Achse (1) des Schienenfahrzeugs gekoppelte Verformungserfassungsschaltung (10); wobei die Verformungserfassungsschaltung (10) so beschaffen ist, dass sie die zeitliche Entwicklung eines Wertes der Biegeverformung der Achse (1) aufgrund eines Wertes einer von der Achse auf die Schiene ausgeübten normalen Last erfasst;
    - ein Überwachungsmittel, das so beschaffen ist, dass es einen Wert einer Winkelgeschwindigkeit ($V\omega$) der Achse als Funktion einer Frequenz f schätzt, die aus der zeitlichen Entwicklung des von der Verformungserfassungsschaltung (10) erfassten Wertes der Biegeverformung der Achse (1) abgeleitet ist.

2. System zur Bestimmung einer Winkelgeschwindigkeit ($V\omega$) einer Achse eines Schienenfahrzeugs nach Anspruch 1, wobei zwei Räder mit einem Radius (R) mit der Achse (1) gekoppelt sind und das Überwachungsmittel weiter so beschaffen ist, dass es den Wert der Winkelgeschwindigkeit ($V\omega$) der Achse in einen Wert der Tangentialgeschwindigkeit (Vtang) des Schienenfahrzeugs gemäß dem Radius der Räder (R) umwandelt.

3. System zur Bestimmung einer Winkelgeschwindigkeit ($V\omega$) einer Achse eines Schienenfahrzeugs nach Anspruch 1 oder 2, wobei die Formel zur Schätzung eines Wertes der Winkelgeschwindigkeit ($V\omega$) der Achse als Funktion der Frequenz f, die aus der zeitlichen Entwicklung des von der Verformungserfassungsschaltung (10) erfassten Wertes der Biegeverformung der Achse (1) abgeleitet ist, lautet:

$$V_\omega = 2 * \pi * f$$

4. System zur Bestimmung einer Winkelgeschwindigkeit ($V\omega$) einer Achse eines Schienenfahrzeugs nach einem der vorangehenden Ansprüche, wobei die Formel zur Umwandlung des Wertes der Winkelgeschwindigkeit ($V\omega$) der Achse in einen Wert der Tangentialgeschwindigkeit (Vtang) des Schienenfahrzeugs lautet:

$$V_{tang} = V_\omega * Radius\ des\ Rades$$

5. System zur Bestimmung einer Winkelgeschwindigkeit ($V\omega$) einer Achse eines Schienenfahrzeugs nach einem der vorangehenden Ansprüche, wobei die Verformungserfassungsschaltung (10) zumindest eine Spannungsmess-Sensorvorrichtung aufweist.

6. System zur Bestimmung einer Winkelgeschwindigkeit ($V\omega$) einer Achse eines Schienenfahrzeugs nach einem der vorangehenden Ansprüche, wobei die Verformungserfassungsschaltung (10) zumindest eine piezoelektrische Sensorvorrichtung aufweist.

7. System zur Bestimmung einer Winkelgeschwindigkeit ($V\omega$) einer Achse eines Schienenfahrzeugs nach Anspruch 5 oder 6, wobei die Spannungsmess-Sensorvorrichtung oder die piezoelektrische Sensorvorrichtung parallel zu der Achse (1) angeordnet ist.

**8.** Verfahren zur Bestimmung eines Wertes einer Winkelgeschwindigkeit (Vω) einer Achse (1) eines Schienenfahrzeugs, aufweisend die Schritte des

    - Erfassens der zeitlichen Entwicklung eines Wertes der Biegeverformung der Achse (1) aufgrund eines Wertes einer von der Achse auf die Schiene ausgeübten normalen Last;
    - Schätzens eines Wertes der Winkelgeschwindigkeit (Vω) der Achse als Funktion einer Frequenz f, die aus der zeitlichen Entwicklung des von der Verformungserfassungsschaltung (10) erfassten Wertes der Biegeverformung der Achse (1) abgeleitet ist.

**9.** Verfahren zur Bestimmung eines Wertes einer Winkelgeschwindigkeit (Vω) einer Achse eines Schienenfahrzeugs nach Anspruch 8, wobei zwei Räder mit einem Radius (R) mit der Achse (1) gekoppelt sind und das Verfahren weiter den Schritt des

    - Umwandelns des Wertes der Winkelgeschwindigkeit (Vω) der Achse in einen Wert der Tangentialgeschwindigkeit (Vtang) des Schienenfahrzeugs als Funktion des Radius der Räder (R) aufweist.

**Revendications**

**1.** Système de détermination d'une vitesse angulaire (Vω) d'un essieu (1) d'un véhicule ferroviaire, comprenant :

    - un circuit de détection de déformation (10) accouplé à l'essieu (1) du véhicule ferroviaire ; ledit circuit de détection de déformation (10) étant agencé pour détecter la tendance dans le temps d'une valeur de déformation à la flexion de l'essieu (1) en raison d'une valeur d'une charge normale exercée par l'essieu sur le rail ;
    - un moyen de commande agencé pour estimer une valeur de vitesse angulaire (Vω) de l'essieu en fonction d'une fréquence f dérivée de la tendance dans le temps de la valeur de déformation à la flexion de l'essieu (1) détectée par le circuit de détection de déformation (10).

**2.** Système de détermination d'une vitesse angulaire (Vω) d'un essieu d'un véhicule ferroviaire selon la revendication 1, deux roues ayant un rayon (R) étant accouplées à l'essieu (1) et ledit moyen de commande étant en outre agencé pour convertir ladite valeur de vitesse angulaire (Vω) de l'essieu en valeur de vitesse tangentielle (Vtang) du véhicule ferroviaire conformément au rayon des roues (R).

**3.** Système de détermination d'une vitesse angulaire (Vω) d'un essieu d'un véhicule ferroviaire selon la revendication 1 ou 2, dans lequel la formule utilisée pour estimer une valeur de vitesse angulaire (Vω) de l'essieu en fonction de la fréquence f dérivée de la tendance dans le temps de la valeur de déformation à la flexion de l'essieu (1) détectée par le circuit de détection de déformation (10) est :

$$V\omega = 2 * \pi * f$$

**4.** Système de détermination d'une vitesse angulaire (Vω) d'un essieu d'un véhicule ferroviaire selon l'une quelconque des revendications précédentes, dans lequel la formule utilisée pour convertir la valeur de vitesse angulaire (Vω) de l'essieu en valeur de vitesse tangentielle (Vtang) du véhicule ferroviaire est :

$$Vtang = V\omega * rayon\ de\ la\ roue$$

**5.** Système de détermination d'une vitesse angulaire (Vω) d'un essieu d'un véhicule ferroviaire selon l'une quelconque des revendications précédentes, dans lequel le circuit de détection de déformation (10) comprend au moins un moyen capteur à jauge de contrainte.

**6.** Système de détermination d'une vitesse angulaire (Vω) d'un essieu d'un véhicule ferroviaire selon l'une quelconque des revendications précédentes, dans lequel le circuit de détection de déformation (10) comprend au moins un moyen capteur piézoélectrique.

**7.** Système de détermination d'une vitesse angulaire (Vω) d'un essieu d'un véhicule ferroviaire selon la revendication 5 ou 6, dans lequel le moyen capteur à jauge de contrainte ou le moyen capteur piézoélectrique est agencé parallèle à l'essieu (1).

**8.** Procédé de détermination d'une valeur de vitesse angulaire (Vω) d'un essieu d'un véhicule ferroviaire (1), comprenant les étapes consistant à :

    - détecter la tendance dans le temps d'une valeur de déformation à la flexion de l'essieu (1) en raison d'une valeur de charge normale exercée par l'essieu sur le rail ;
    - estimer une valeur de vitesse angulaire (Vω) de l'essieu en fonction d'une fréquence f dérivée de la tendance dans le temps de la valeur détectée de déformation à la flexion de l'essieu (1).

**9.** Procédé de détermination d'une valeur de vitesse angulaire (Vω) d'un essieu d'un véhicule ferroviaire (1) selon la revendication 8, deux roues ayant un rayon (R) étant accouplées à l'essieu (1), et le procédé comprenant en outre l'étape consistant à :

- convertir ladite valeur de vitesse angulaire (Vω) de l'essieu en valeur de vitesse tangentielle (Vtang) en fonction du rayon (R) des roues.

FIG.1

Strain gauge x Axle bending
Sinusoid frequency = 10 Hz ⟶ 100 km/h

Time [SEC]

0,1  0,2  0,3  0,4  0,5  0,6  0,7  0,8  0,9  1,0

Axle bending [Mpa]

250  200  150  100  50  0  -50  -100  -150  -200  -250

T

FIG.2

FIG.3A

FIG.3B

Deformation measurement of the wheelset (axle and/or wheel) through the use of strain gauge sensors

⬇

Calibration of the measurement system

⬇

Measurement of contact forces: strains and stresses to which rails and wheelset are subjected

⬇

Monitoring of the infrastructure and of the rolling stock and relevant maintenance

# FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006128878 A1